# EUROPEAN PATENT APPLICATION

(11) **EP 4 092 594 A1**
(43) Date of publication of application: **23.11.2022**
(21) Application number: 21768950.4
(22) Date of filing: 23.02.2021
(51) Int. Cl.: G06Q 20/10, G06Q 20/14, G06Q 20/02, G06Q 20/38, G06Q 20/40, G06Q 20/42, H04L 29/06

(54) **ELECTRONIC PAYMENT SYSTEM AND METHOD SUITABLE FOR OTT ENVIRONMENT**

(30) Priority: 12.03.2020 KR 20200030554; 24.03.2020 KR 20200035610
(71) Applicant: World First Tech Corporation, Seoul 06253 (KR)
(72) Inventor: PARK, Kwang Lim, Daejeon 34186 (KR)
(74) Representative: Stolmár & Partner Patentanwälte PartG mbB
(86) International application number: PCT/KR2021/002266
(87) International publication number: WO 2021/182774

(57) **Abstract**

The present disclosure relates to a payment system and method using a real-name account of a seller, the system and method being expanded from universal payment gateway (PG) platforms to the over the top (OTT) platform market and, more specifically, a payment system and method in which a payment exclusive account (hereinafter, payment account) opened in the real-name of a seller is used by default so that, in non-face-to-face electronic commerce, transactions may be conducted in real-time through live broadcasts between a plurality of unspecified sellers and a plurality of unspecified buyers at home and abroad, thereby enabling convenient, speedy, and safe processing with reduced processing costs.

## Description

### [Technical Field]

The present disclosure relates to a payment system and method using a real-name account of a seller, the system and method being expanded from universal payment gateway (PG) platforms to the over the top (OTT) platform market and, more specifically, a payment system and method in which a payment exclusive account (hereinafter, payment account) opened in the real-name of a seller is used by default so that, in non-face-to-face electronic commerce, transactions may be conducted in real-time through live broadcasts between a plurality of unspecified sellers and a plurality of unspecified buyers at home and abroad, thereby enabling convenient, speedy, and safe processing with reduced processing costs.

### [Background Art]

Technology related to e-payment in non-face-to-face transactions has changed very little so far. In other words, in most cases, a third party held the payment gateway (from now on, it is referred to as PG) through a prepayment plan. With the advent of new models of OTT platforms such as YouTube, Netflix, and Wavve, which have brought the sense of a global village, a new era has made it necessary to diversify the payment market; still, the payment market is lagging behind the change of the era.

Until now, it was not possible to eradicate abnormal product transactions such as false advertisements, out-of-stock transactions, and transactions of stolen goods from e-payment due to the limits imposed by local IT technology and financial laws of each country; restrictive factors in various transactions and consumer damage cases have been reported, where in particular, critical points of transactions are getting further intensified for international transactions.

The OTT platform is divided into a "closed OTT service" provided by professional video producers and broadcasters producing movies, dramas, and documentaries and an "open OTT service" provided by single-person creators and consumed casually, such as mukbang, travel, and daily vlogs.

In the case of closed OTT services, Netflix is leading the market, and in the case of open OTT services, YouTube is leading the market. Since their payment method is based on the monthly payment, their payment plan does not deviate significantly from the existing PG service plan framework and is accepted with a slight change.

On the other hand, if the OTT platform evolves into a mediation-type or relay-type OTT service platform (e.g., music, webtoon, education, and commerce), the existing PG technology is bound to reach its limit; thus, payment technology is urgently needed to meet the requirement for various services of the OTT platform expected to change in the future.

In other words, OTT services are based on a platform providing services without restrictions across borders.

Therefore, the importance of payment relates to the issues of tax and customs duty.

Since the existing payment system is unable to solve the issues, a new payment system is required to solve them.

Meanwhile, over-the-top (OTT) services that use video contents, such as a video on demand (VOD) service, are being actively commercialized in a shopping mall environment.

New home shopping channels are continually increasing, and T-commerce, where people enjoy shopping while watching videos, is also developing. The service industry diagnosed that this trend comes from the difficulty of maintaining the OTT business, let alone growing it, only with a market based on the fixed monthly payment paid by subscribers.

It is generally agreed that a pure OTT service such as Netflix may hardly thrive in Korea because the paid VOD market is still small. In addition, the demand from home shopping companies rushing toward the mobile market is expected to further the alliance between the OTT service and the home shopping business.

Whereas the existing media commerce relies on selling products via simple advertisements and promotions of contents through one-person media and social media, recent media commerce employs a platform that promotes direct sales in mobile environments using a TV-to-online (T2O) scheme for sales and purchases in which product information is melted into programs related to sports contents, drama, and entertainment in various formats optimized for OTT platforms.

In the domestic market, single-person creators first adopted the new platform. The "branded content" has emerged, which advertises products in a short time and with fun on a platform such as YouTube. The existing media, such as broadcasting, felt a sense of crisis at the interest of people toward the branded content and a changed trend different from the existing market. So was commerce. Many platforms for home shopping and social commerce have been created, but long-term survival strategies have to be devised due to intensifying competitions and economic downturn.

To respond to the consumption pattern of the public who prefer the OTT environment, media commerce has to change in a way that targets customers willing to purchase and consume necessary goods.

Therefore, the most important thing for the combination of media, commerce, and OTT environment is whether a payment system is accepted, and it is expected to be very difficult if there is no change in the acceptance thereof; the reasons for not being able to operate a payment service that encompasses various contents businesses of the OTT service market newly changing to the third-party payment gateway (PG) method are as follows.

First, IT technology is advancing beyond imagination, but the payment methods are still based on the technology used 30 years ago. Looking at payment companies, PayPal dominates in international transactions, Alibaba in China, and a company called inicis in Korea. However, their trading solutions may look different from the outside, but in reality, there is no difference in the technology used.

In other words, for a safe transaction between a buyer and a seller, a PG company holds transaction money on behalf of the parties to facilitate the transaction. In addition, the PG company exclusively possesses all of the buyer's financial and transaction information. In this regard, a new technological solution is needed to solve the monopolization of information and the retention of transaction money.

The second reason is that instant settlement or real-time settlement is impossible.

The most physically time-consuming element in the settlement process of existing PG companies is the process that requires collating all the data to be settled for each transaction. It takes at least a few hours to one day to complete the collation process, and transferring the purchase amount to the seller after the collation process is done by requesting a bank to perform the money transfer; when an error occurs during the process, the collation process has to be performed again, which leads to a considerable delay until the settlement is completed and consequently to an increase of the operating cost.

Companies that sell real-time live broadcasting services such as home shopping, which are severely constrained by the TV program schedule, have difficulties accepting the existing PG companies' payment and settlement processing methods.

Therefore, since companies that provide e-commerce services such as real-time, live broadcast sales require quick settlement, they used to operate a call center to pay and settle directly instead of using an existing PG company's operating services. Suppose the existing PG companies handle home shopping payments; if a home shopping company requests settlement after delivering a product according to a buyer's order, the PG company transfers sales amount to the home shopping company after completing a settlement procedure including a collation task for each order, and the home shopping company returns purchase amount to a seller only after performing its own settlement process including a collation process.

Therefore, a systematic limit exists in the settlement that has to be made after a buyer receives an ordered product such that "instant settlement" or "real-time settlement" may never be made. In addition, going through the settlement step multiple times greatly impacts the increase of a commission rate and time delay. Thus, only the "instant settlement" or "real-time settlement" payment service that the existing PG technology may not solve is a future-oriented payment model that may be accommodated even if the number of transactions between a plurality of unspecified buyers and a plurality of unspecified sellers is greatly increased.

The third reason relates to the problem of "authentication certificates." In other words, the problem with the authentication certificate is that it only supports a country's own citizens. There is no consideration for legal foreigners residing in Korea, and applying the authentication certificate to those who want to do non-face-to-face transactions abroad is even more difficult. In the present and future non-face-to-face e-commerce, it does not matter where the buyer is or what country the buyer comes from; anyone should be able to buy and sell anywhere.

Meanwhile, each country uses different forms or procedures for buyer authentication and seller authentication methods, and it is impossible to request the corresponding country's related organization that provides an authentication service to issue an authentication certificate; thus, the authentication methods of the existing PG companies may not be applied to each country.

Authentication steps may be processed based on an agreement; however, it is virtually impossible for a commercial company such as a PG company to request certification from anyone in other countries. After all, this is why existing PG companies have been operating in a state where only domestic transactions are allowed.

Therefore, global services such as e-commerce based on the OTT system may not be provided without solving the authentication problem.

It is time to provide a solution that supports a convenient and secure authentication method for OTT commerce services with which anyone may buy and sell products.

The fourth reason is the lack of diversity in payment. It may be said that a card payment system is well established in the domestic e-commerce environment, but it isn't easy to facilitate e-commerce in those countries where payment using a card is not widely used.

Fifth, when foreign PG companies do business in Korea, the well-known PayPal and Alipay services check the validation of a credit card from an input of the card CVC code or SMS authentication.

After the validation, payment is easily made by simply entering an ID and a password. Recently, domestic financial authorities are encouraging the introduction of simple payment services. Suppose the domestic simple payment market is fully opened. In that case, famous global PG companies such as PayPal and Alibaba, which are currently used for overseas direct purchases from the US, will appear in the form of direct operation in Korea, and domestic PG companies still in their infancy are placed at a position to compete with them.

Therefore, when overseas PG companies enter and expand the domestic business, leakage of domestic personal information such as personal financial and transaction information becomes very serious.

Sixth, when a transaction occurs between countries, an exchange rate, a storage location of the purchase amount, and the safety of the purchase amount are very important. When a buyer in country B purchases a product sold in country A, there is a problem that the corresponding country should hold the purchase amount even before the buyer in country B receives the product sold in country A.

For example, a domestic buyer who purchases a product from a Chinese mall linked to a PG company should have an account with a Chinese bank or Visa/Master card to pay for the product at the Chinese mall. It is obvious that before receiving the product, the purchase amount has to be deposited as an advance payment in a Chinese bank linked to the Alibaba PG.

Since buyers purchase products through direct purchase/reverse direct purchase agencies due to the anxiety about the advance payment, considerable complications and inconveniences arise due to payments in the case of refund or return that may occur in international transactions.

When a domestic buyer holds an account with a Chinese bank and makes a transaction, it causes a more complex situation in the occurrence of a problem because the buyer has to solve the problem directly through China. The transaction itself becomes impossible in the case of a local domestic card other than a Visa or Master card.

Moreover, there are cases where a Visa or Master card itself does not work.

Therefore, a non-face-to-face payment method for international transactions is essential.

### [Disclosure]

### [Technical Problem]

To solve the problems above, which are the limits of a payment system of existing PG companies, an object of the present disclosure is to provide a payment platform expanded to the OTT environments in which a plurality of unspecified buyers and a plurality of unspecified sellers at home and abroad perform e-commerce transactions without particular limits through real-time live broadcast such as home shopping, recorded broadcast, or images.

An object of the present disclosure is to provide an electronic payment service platform that is easy to use and reduces various fees, which adopts a seller's payment account as a default account for payment and provides real-time or instant settlement, thereby enabling a buyer to use an authentication system conveniently and to perform transactions safely, enabling the buyer to choose goods or services as if face-to-face, and enabling the seller to secure various distribution channels.

An additional object of the present disclosure is to provide a payment service platform that may protect a buyer's financial information from hacking or theft by dualizing a protection scheme so that only the financial institution maintains the buyer's financial information.

Another object of the present disclosure is to provide a payment service platform that fundamentally solves a tax problem occurring from the operation of a virtual account, complex problems of all sorts occurring from returning and refunding goods or services, a breakage income problem due to a PG company holding the purchase amount of a buyer up until the settlement stage, and a settlement problem at the time of refund and return, which is an obstacle to international transactions.

An object of the present disclosure is to provide a payment service platform in which a buyer and a seller may transact at a varying price in real-time as if face-to-face through real-time live broadcasting through a post-payment transaction using the seller's payment account.

Also, an object of the present disclosure is to provide various payment services made safer and simpler by using a smartphone and a card in connection with the payment service platform of the present disclosure.

Also, an object of the present disclosure is to operate the payment service platform of the present disclosure in conjunction with other existing services so that e-commerce payment may be expanded and operated even for existing PG companies, YouTube, Facebook, Amazon, and other shopping malls.

### [Technical Solution]

To achieve the objects above,
A method according to the present disclosure comprises providing a shopping contents image provided in real-time by a seller or pre-stored information on various products sold by the seller to a buyer terminal through a payment connection module system 300 by the payment connection module system 300, the buyer terminal 200, a seller system 100, a courier system 500, a banking system 400, and the corresponding financial institute 600 in connection with each other; receiving a request for information related to authentication of a buyer and payment through a payment module displayed on the buyer terminal by the payment connection module system; and performing a process by a financial information protection (FIP) processing module of the banking system to protect key information such as the buyer's financial information among the information related to authentication of the bury and payment.

After receiving a request for information necessary for the authentication of a buyer and payment from the payment connection module system and completing a verification process for authentication and payment, the banking system performs requesting transfer of purchase amount to a payment account in the seller's name from the corresponding institution 600 based on request information of the buyer received through the payment connection module system.

Here, the seller's payment account is a key element of the present disclosure, and to point out the characteristics thereof, the seller's payment account is in the seller's real name opened by the seller according to the terms and conditions specially stipulated through a bank; although the account is in the seller's name, the contracted bank is responsible for the transfer of all of the purchase amount transferred to the payment account. The seller's payment account is an escrow-type contracted account in which the contracted bank is responsible for transfer from a buyer's account and transfer to the accounts of a courier company, a PA company, and the seller at the time of transaction settlement, where the payment account is opened through a procedure similar to the procedure for opening a general business account requiring written consent of the PA company and papers required by the bank.

Payment according to the present disclosure is performed by including receiving a transfer result from a banking system by the payment connection module system when purchase amount is transferred to the payment account in the step above and notifying the seller system and/or the buyer terminal of the received transfer result; and
Gathering information on refund, return, and delivery received from the payment connection module system and settling the purchase amount for each seller and transferring the settled purchase amount to a designated account of each seller.

In the present process, the nature of the purchase amount transferred to the seller's payment account is by default post-payment, and if necessary, the purchase amount may be processed in other methods such as pre-payment or cash on delivery; when the purchase amount is processed based on post-payment, it is possible to perform immediate or real-time settlement in connection with a periodic settlement plan of a computing system of banks.

To enable a plurality of e-commerce transactions to be performed smoothly between a plurality of unspecified buyers and a plurality of unspecified sellers, which is the primary purpose of the present disclosure, instant settlement or real-time settlement is essential. A payment system of conventional PG companies employs a pre-payment plan in which a third-party PG company holds purchase amount that a buyer pays for a product before the product is delivered, which involves a complex settlement procedure such as a collation task due to the pre-payment plan and a virtual account operation method and runs the task period of the PG company's computing system for settlement less smoothly than that of a banking system; thus, real-time settlement or instant settlement is not provided, and the present disclosure solves the problem above.

In a situation where real-time or instant settlement is not made, it is impossible to accept the payment of e-commerce transactions, which may be significantly increased by a plurality of unspecified people in the OTT environment due to continuously accumulated settlement problems.

To examine processes related to the system for performing the tasks at the respective steps,
First, for real-time live shopping and payment, a broadcast reception management unit 380 of the payment connection module system 300 receives S110 a signal transmitted S100 from a broadcast transmission module of the seller system 100 through the Internet interface unit 351, 359, 380 and provides S130 real-time live shopping contents to the buyer terminal 200 according to a streaming method S120.

The payment connection module system 300 receives, through the Internet, information related to payment input S170 through a payment module displayed on the screen of the buyer terminal 200, and a payment connection task processing unit 370 of the payment connection module system performs information processing and performs information exchange and task processing with an external banking system 410 through socket communication of a dedicated financial network.

The payment connection task processing unit 370 stores data in connection with a database management unit 340 for various input information on payment, performs information processing, or performs tasks related to a managed daemon S160.

However, the key information, such as the financial information of a buyer, is not stored in the database management unit but delivered to a banking system so that the banking system itself protects and processes the key information.

The payment connection task processing unit 370 of the payment connection module system 300 not only processes and transfers various payment requests by the buyer terminal 200 but also processes the delivery information and delivery settlement in conjunction with a delivery information server system 500 of a courier company.

The payment connection module system 300 may separately operate an overseas payment connection daemon module 320 for overseas payment processing to link with a foreign payment platform operated according to the method of the present disclosure.

The banking system 400 is composed of an external banking system 410 and an internal banking system 420 and communicates with the payment connection module system 300 through socket communication which is a dedicated financial network.

The socket communication is a dedicated financial network for task processing of a financial information protection (FIP) processing module 450 and a purchase price guarantee (PPG) processing module which are processed by a banking system.

In the internal banking system 420, a payment account management system 490 managing a payment account performs payment account-related task processing in conjunction with the processing modules of the banking system.

In the external banking system 410, a database management unit 415 may store and process various pieces of information received from the payment connection module system 300.

The banking system 400 transmits and receives financial information to and from the corresponding financial institution 600 (a buyer account management bank, a card issuing company, another financial institution, and a lender) associated with a buyer, receives the purchase amount from the buyer's account S190, receives the purchase amount from a card issuing company directly or according to a contracted method, or receives the purchase amount from another financial institution and a lender; and the contracted banking system 400 may check financial information for authentication and payment of the buyer based on a buyer's request.

According to the system of the present disclosure and the process performed at each step, real-time or instant settlement may be performed, and a procedure for authenticating a buyer may be performed using the buyer's account information; thus, authentication and payment for e-commerce transactions may be performed on the electronic payment platform of the present system once a foreigner working in a domestic place opens a bank account.

The system of the present disclosure and the process performed at each step has been described based by default on a real-time payment method while a buyer watches live shopping contents in real-time on the buyer terminal in the OTT environments,

A method of the present disclosure may not only perform electronic payment for the real-time live broadcast but also record the provided contents and service the recorded contents regularly to a buyer terminal according to a program schedule and perform payment in the same way as in the electronic payment for a product within the contents.

In addition, the products for sale provided on the seller's website may be supplied in connection with images or videos, or the product information is adapted in a certain form and so provided to the buyer terminal, and electronic payment may be performed in the same manner as in the method above for the product ordered by the buyer.

### [Advantageous Effects]

The present disclosure provides an e-commerce payment platform that provides real-time live or recorded broadcasts or product images of broadcast contents and enables anyone unspecified to perform e-commerce transactions in an OTT environment that provides a service to anyone, anywhere over the globe through the Internet, thereby activating non-face-to-face e-commerce.

Sellers may easily promote their products or services in real-time with a smartphone by using the payment platform of the present disclosure, increase distribution competitiveness due to low sales commissions, and quickly retrieve the sales amount due to an instant settlement system.

A buyer may easily access product information by examining a real-time broadcasting schedule in which various pieces of product information are organized by categories, such as region, product, use, and time zone; the buyer may purchase a product through immediate payment at a price that changes on the screen of the buyer terminal.

In addition, the present disclosure provides an effect of searching for product information quickly, conveniently, and in various ways by referring to accumulated broadcasting contents.

As a financial institution is in charge of a buyer's financial information, the present disclosure may improve security and maintain security even during simple payment.

The present disclosure uses a seller's real name account by default and avoids tax and breakage income problems that occur in virtual accounts, thereby improving the seller's credibility and preventing false advertisements completely.

The present disclosure not only improves convenience by expanding payment to those buyers for whom buyer authentication was impossible, such as foreigners working in Korea but also opens a new chapter by transforming the whole world into a single global market through the present e-commerce payment method.

### [Description of Drawings]

FIG. 1 is a drawing referenced in relation to the introduction of the PSD2 financial policy of the Korea Financial Services Commission according to one embodiment of the present disclosure.
FIG. 2 is a drawing referenced to illustrate the overall structure and workflow of a payment system in which the "payment connection module" of the PA company operates the buyer, the seller, and the contracted bank in conjunction with each other.
FIG. 3 is a drawing referenced to illustrate a method for operating a payment system viewed from the software point of view, which expresses a flow of signals controlling the entire system by the "payment connection module" of the PA company according to one embodiment of the present disclosure.
FIG. 4 is a structural block diagram of a payment connection module system according to one embodiment of the present disclosure.
FIG. 5 is a drawing referenced to illustrate a software process of a payment system according to one embodiment of the present disclosure, in which the seller provides contents through the "payment connection module," a buyer terminal watches the corresponding information, and the "payment connection module" responds to a payment request from the buyer and processes the payment request.
FIG. 6 is a drawing referenced to illustrate a software process of a payment system according to one embodiment of the present disclosure, in which, if the buyer inputs financial information through the buyer terminal to protect the buyer's personal information, the "payment connection module" responds to the input and requests the "payment account" management system of the "contracted bank" internal system to manage and protect the financial information including key information related to transactions through the "contracted bank" external system.
FIG. 7 is a drawing referenced to illustrate a software process of a payment system according to one embodiment of the present disclosure, in which the buyer terminal receives a payment request for product purchase from the "payment connection module," requests the "contracted bank" to secure purchase amount of the buyer, transfer the purchase amount to the seller's "payment account," and process authentication, and receives information on the processing result.
FIG. 8 is a drawing referenced to illustrate a specific process of a payment system according to one embodiment of the present disclosure, which receives information on settlement including delivery-related information from the seller or the buyer's refund request from the buyer terminal through the "payment connection module" and requests the "contracted bank" to perform a procedure for settlement or refund.
FIG. 9 is a drawing referenced to illustrate a specific process of a payment system according to one embodiment of the present disclosure, in which the "contracted bank" settles or refunds each commission and purchase amount simultaneously.

### [Mode for Disclosure]

In what follows, the present disclosure will be described in more detail with reference to appended drawings.

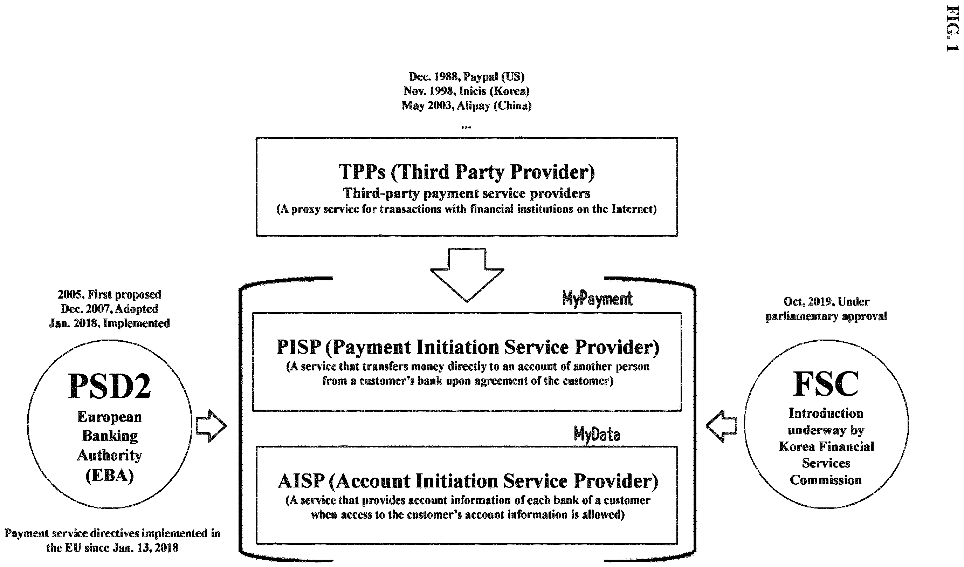

FIG. 1 is a drawing referenced to illustrate a policy proposed by the government in relation to the introduction of the PSD2 financial policy by the Korean Financial Services Commission according to one embodiment of the present disclosure, which dualizes the operation policies of the "third-party payment service providers (TPPs)" by existing PG companies into "payment initiation service provider (PISP): MyPayment" and "account initiation service provider (AISP): MyData" to be contemporary with the current business, thereby illustrating that the policy is consistent with the present disclosure.

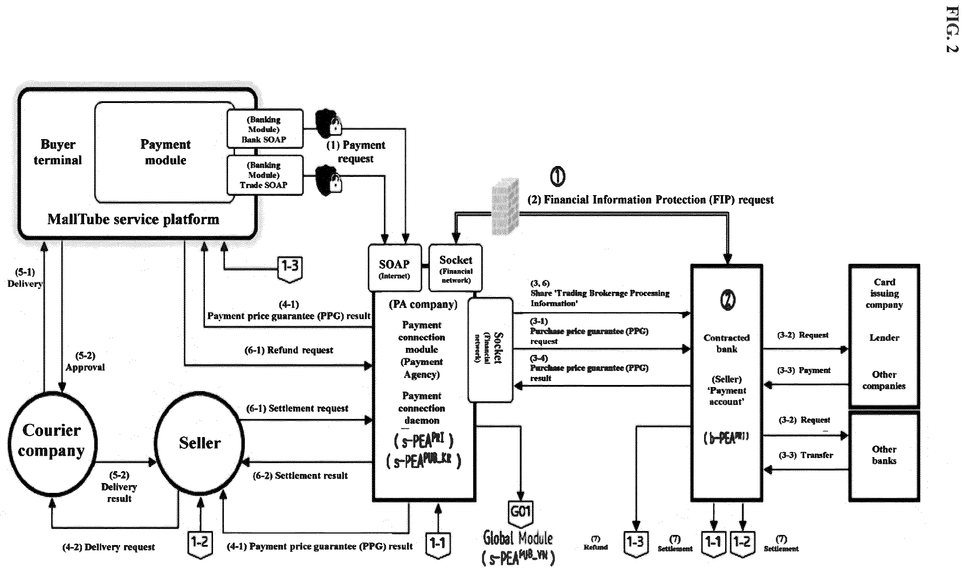

FIG. 2 is a drawing referenced to illustrate the overall workflow of a payment system in which the "payment connection module" of the PA company operates the buyer, the seller, and the contracted bank in conjunction with each other; if the model shown in FIG. 2 is serviced in other countries, technical stability following international financial laws may be achieved, and payment may be performed with a general card that does not require a Visa/Master card. The figure shows a standard workflow designed to enable domestic and international processing of various types of payments, such as cash, account transfer, and loan.

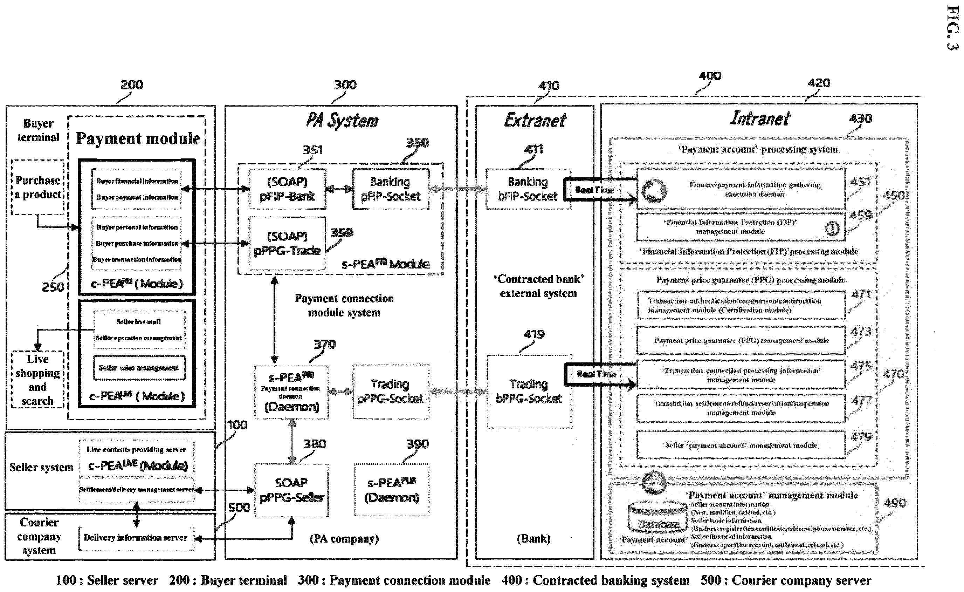

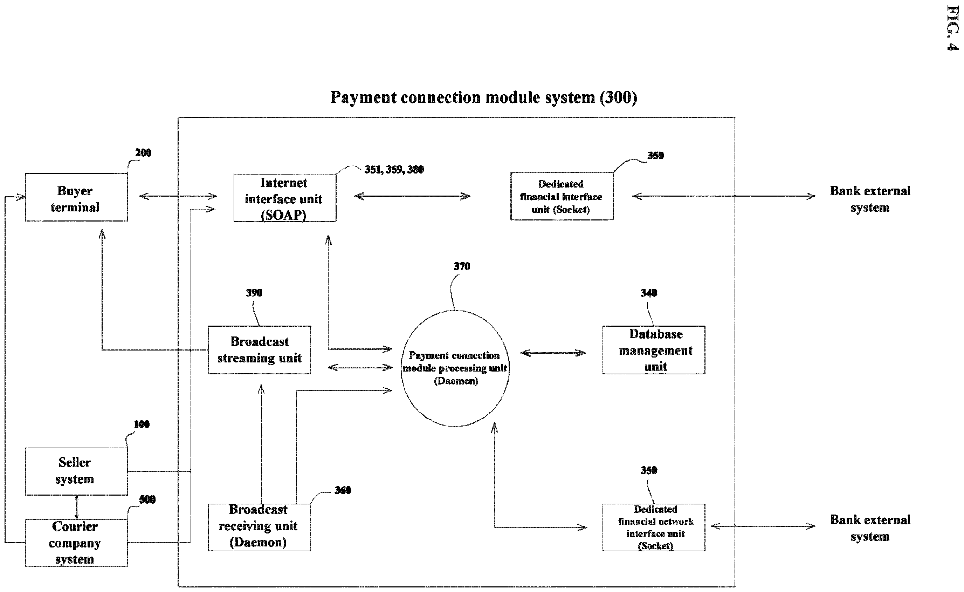

FIGS. 3 and 4 show a payment system and a software process according to one embodiment of the present disclosure.

Referring to FIGS. 3 and 4, the payment connection module system 300 of a PA company according to the present disclosure is a payment platform configured to enable non-face-to-face product or service transactions by relaying a buyer terminal 200, a seller system 100, a courier system 500, a contracted banking system 400, and the corresponding financial institution 600, the basic configuration of which comprises a buyer terminal, a seller system, an Internet interface unit 351, 359, 380 transmitting and receiving information to and from a courier system through the Internet, a broadcast receiving unit 360 for receiving and processing shopping contents from the seller system, and a broadcast streaming unit 390 for streaming and supplying the shopping contents to the buyer terminal.

Also, the payment connection module system of a PA company further includes a payment connection task processing unit 370 processing various pieces of information related to transactions and payment received from the buyer terminal, a database management unit 340 storing and managing shopping contents and transaction payment information, a dedicated socket financial network 350 for transmitting and receiving information to and from a banking system.

To describe a process performed by the payment connection module system 300,

The process comprises receiving a shopping contents video provided by the seller system 100 and streaming the received video to the buyer terminal; receiving, by the payment connection module system 100, information related to payment for the purchase of a product or a service to be ordered by the buyer through a payment module 250 of the buyer terminal 200;

Requesting information related to the buyer's request among the input information, such as an account transfer of the buyer, from the contracted banking system 400 by the payment connection module system 300;

Requesting the buyer's corresponding financial institution system 600 to perform account transfer according to the account transfer request information by the contracted banking system 400 and receiving a notification about the result that the purchase amount has been transferred to the payment account in the seller's name managed by the contracted banking system 400;
Receiving a notification about the transfer result by the payment connection module system 300 and notifying the seller system 100 and/or the buyer terminal 200 of the transfer result; and

Notifying the contracted banking system 400 of the information on the transaction indicating whether the transaction has been normally terminated, such as delivery, return, or refund occurred during a product transaction so that the contracted banking system 400 settles the purchase amount transferred to the payment account and transfers the purchase amount to the seller's designated account.

While the process is performed, the payment connection module system 300 only relays the financial information required for a buyer to perform membership registration, payment, and authentication to the contracted banking system 400 for processing of the information, where the financial information is not stored in the payment connection module system 300 but managed only by a banking system for processing of authentication and payment required for transactions.

A buyer who purchases a product or a service may receive a "seller service" video through the "buyer terminal" 200 in real-time through the payment connection module system 300 and may watch the video as a real-time live broadcast video. When the buyer purchases a product or a service and requests payment by selecting one of the various methods such as account transfer, card, or loan through the "payment module" 250 displayed on the "buyer terminal" 200, the "payment connection module system" 300 may respond to the request and request the "contracted banking system" 400 to pay the purchase amount.

In the present disclosure, post-payment using the seller's payment account (PEA {Public/Private}) is by default performed for the buyer's payment of the purchase amount. Since the existing PG uses a pre-payment plan, it is inherently different from the seller's payment account, which employs a post-payment plan. The difference between the pre-payment and post-payment plan is that in the case of pre-payment, the buyer's purchase amount is transferred immediately from the buyer's account to the account of a third-party PG company regardless of whether a purchased product is delivered; thus, the corresponding non-face-to-face transaction transitions to the "transaction end" state.

At this time, since "transaction end" occurs in the non-face-to-face transaction, if the seller requests settlement even before the buyer receives an ordered product, settlement may be performed on the purchase amount, and the corresponding transaction is treated as a normal transaction according to the settlement even if the purchase amount is given to the seller.

In particular, in the case of payment using a credit card, which accounts for a significant portion of payment cases, the seller's request for settlement is very high, or the request is made quite early; therefore, in the occurrence of a return or refund request after a transaction is over, settlement becomes a complicated issue, and a considerable time may be needed, or a related procedure becomes complicated until the purchase amount is refunded to the buyer, or the purchase amount is settled again for the seller.

However, according to the present disclosure, when the buyer's purchase amount is transferred to the seller's payment account, one of the parties participating in the corresponding transaction holds the purchase amount, the non-face-to-face transaction transitions to the "transaction in progress" state, and only when the buyer receives the corresponding product and provides "product confirmation" information to the seller or an automatic payment period specified in the e-commerce act expires, the non-face-to-face transaction transitions to the "transaction end" state; therefore, since the seller is unable to request settlement in the "transaction in progress," post-payment is performed, in which the purchase amount is not paid to the seller, and only after the transaction is completed, the purchase amount is transferred to the seller through settlement.

Therefore, it is possible to fundamentally prevent problems such as purchase cancellation due to false advertisements, out-of-stock, and stolen goods; refunds, breakage income, credit card discounts, and phone fraud in the existing pre-payment method. Here, the seller's payment account is created in the seller's name, which is a payment-only account storing the purchase amount to be paid to the seller; the seller's payment account may be operated separately for domestic sellers and overseas sellers (a service technology to deal with a case where a foreign seller wants to sell a service in the domestic market). Meanwhile, the seller's payment account may be opened using a method similar to that used for creating a corporate or business account offline in a general bank.

When a buyer selects a product through e-commerce and requests a transfer of the purchase amount through a payment module, the purchase amount is transferred from the buyer's account to the seller's payment account. When a contract date is reached, or the seller's request for settlement is received after the final transaction confirmation is received from the buyer, the purchase amount transferred to the payment account is settled in real-time or instantly using an operation method run by the bank's computer system; the respective commissions are transferred to the PA company and the contracted bank, and an amount obtained after subtracting a commission from the purchase amount is transferred to the designated business account of the seller.

However, because the purchase amount is transferred to and protected in a special payment account devised not to allow withdrawal of the purchase amount until a normal settlement is confirmed, the account provides security better than other payment solutions and is built on a structure capable of processing "instant settlement" or "real-time settlement" that the existing PG companies absolutely may not process.

For the creation and management of the buyer payment account, the "contracted bank internal system" 420 is composed of a payment account management system 490 and a payment account processing system 430, where the "payment account management system" 490 performs a seller payment account management task in conjunction with the bank's basic account management system or escrow system.

The "payment account processing system" 430 is composed of two modules, the first of which is a "financial information protection processing module" 450, performing a task by being composed of two means of "financial/payment information gathering execution daemon" 451 and "financial information protection management module" 45.

The "financial/payment information gathering execution daemon" 451 is a daemon function, which is a processor with a function of checking whether a buyer has requested to input, store, change, or search for the buyer's financial information: for example, personal information QR code, resident registration number, passport information, i-PIN information, account information, account password information, credit card information, credit card password information, and other information. The financial information protection management module 459 is a module for protecting and managing the financial information of the buyer for financial information protection according to the request of the "financial/payment information gathering execution daemon" 451.

The existing PG companies manage essential information such as buyers' financial information by applying the PG companies' proprietary security solutions; however, it may not be denied that the PG companies' security solutions are relatively more exposed to hacking than financial institutions.

On the other hand, since PA companies manage, through the system above, buyer personal information (name, phone number, address, email, and so on), purchase information (product name, product code, product information, warranty, and so on), transaction information (delivery, settlement, refund, reservation, suspension, and so on), and payment information (payment form, pre-payment, cash on delivery, post-payment, mixed payment, combined payment, and so on) only and do not hold the financial information of the buyer while only the contracted bank holds and manages the buyer's financial information, it may be considered that the proposed method is more secure than the information protection solutions of the existing PG companies.

The proposed method is a financial technology optimized for the policy promoted by the Financial Services Commission shown in FIG. 1 and forms the core of information dualization that manages transaction information and financial information separately, which is a new service method for protecting the financial information of buyers, not provided in a transaction through existing PG companies.

The second module constituting the payment account processing system 430 of the contracted bank internal system 420 is a "payment price guarantee (PPG) processing module" 470, which is configured to perform a total of five processes: "transaction authentication/comparison/confirmation management module" 471, "payment price guarantee (PPG) management module" 473, "transaction connection processing information management module" 475, "transaction settlement/refund/reservation/suspension management module" 477, "seller payment account management module" 479.

To describe each function in detail, first, the "transaction connection processing information management module" 475 performs a function of gathering personal information, purchase information, transaction information, and payment information received by the "payment connection module system" 300 through the "payment module" 250 of a buyer terminal from the contracted bank external system 410.

And the "transaction authentication/comparison/confirmation management module" 471 performs a function of managing comparison for verification of authentication information of a seller and transaction information and responding to a request by confirming the information, and a function of providing information on a purchase amount processing result in conjunction with the "payment price guarantee management module" 473. Here, the "payment price guarantee management module" 473 stores transaction guarantees that play the same role as domestic accredited certificates; since foreigners may also perform the role of a seller once they hold a payment account agreed with a contracted bank, the present disclosure solves the problem that existing PG companies are unable to solve, where foreigners and foreign companies may not perform the role of a seller.

The "transaction settlement/refund/reservation/suspension management module" 477 performs a function related to settlement/refund/reservation/suspension, such as distributing a buyer's purchase amount by transferring the purchase amount over to the designated accounts of a PA company, a contracted bank, and a seller according to the contract by the settlement made upon completion of the corresponding transaction, and the "seller payment account management module" 479 performs a function of providing information related to the seller's payment account requested by the "payment connection module system" 300 in connection with the "payment account management system" 490.

The "payment account management system" 490 performs a function for management after opening a payment account in the seller's name. The seller's payment account is opened by a business registration certificate, a corporate account, an agreement of a contracted bank, or an agreement of a PA company; the payment account refers to a specific account that holds a buyer's purchase amount, from which deposits and withdrawals are made according to the instructions of the contracted bank and which is managed in conjunction with the "payment connection module system" 300 of the PA company.

Therefore, the present disclosure uses a method in which a buyer or a seller, who is the main entity of a transaction, holds the purchase amount rather than the purchase amount retention method employed by existing third-party PG companies and features a technical solution that is safe, legal, and capable of international transactions.

When a buyer makes a payment request to the payment connection module system 300 through a payment module of the buyer terminal 200, the payment connection module system 300 transfers the purchase amount to a payment account by referencing the payment information requested by the buyer.

At this time, the purchase amount is separately transferred to the payment account for each transaction, and the "payment connection module system" 300 responds to the transfer action upon approval of the request from the buyer, notifies the "contracted banking system" 400 of the transfer action, and thus act as the contracted banking system 400.

The purchase amount transferred to the seller's payment account may be transferred to the seller only when conditions for a normal transaction between the buyer and the seller are satisfied. In the event of a notification that a transaction has not been normally made due to refund or cancellation, the payment amount will be automatically transferred back to the buyer's account. The condition for a transaction to be made is that the contracted banking system receives a request for the information related to the establishment of a transaction from the PA company's "payment connection module system" 300, and the "transaction/settlement/refund/reservation/suspension management module" 477 of the "contracted banking system" 400 proceeds with a related process.

As described above, the present disclosure provides a transaction protection method that enables a secure transaction for any kind of transactions such as P2P, B2C, B2B, B2G, and G2G, which are non-face-to-face e-commerce models for a transaction between the buyer and the seller.

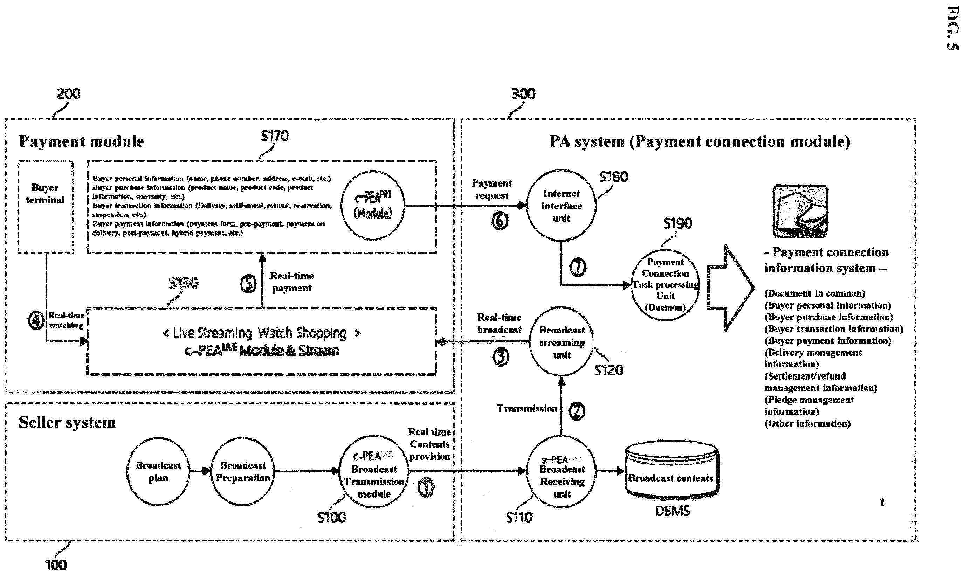

FIGS. 5 to 9 are drawings referenced to illustrate a specific process of a payment system according to one embodiment of the present disclosure.

Referring to FIG. 5, a payment processing system according to the present disclosure may use a technology that communicates all of information through a web-browser and a mobile app. The broadcast receiving unit 360 of the "payment connection module system" 300 receives "real-time shopping contents" S100 from the "seller system" 100, the broadcast streaming unit 390 performs "relay processing" S120, and the payment processing system provides a service allowing a buyer to watch a real-time, live shopping program on the screen of the buyer terminal.

Also, when "payment" S170 is performed to purchase a product through the payment module 200 of the buyer terminal while the buyer is watching a live shopping program, main information related to the purchase is "communicated" S180 after being encrypted.

In this case, as a data security processing method for communication, the Advanced Encryption Standard (AES) technique may be used as a default method.

The method above is a central control technique for controlling broadcasters such as viewers, who correspond to a plurality of unspecified buyers, and a plurality of unspecified sellers and uses a Peer for Peer (P4P) method which is a new technology that supplements the problems of the Peer to Peer (P2P) method.

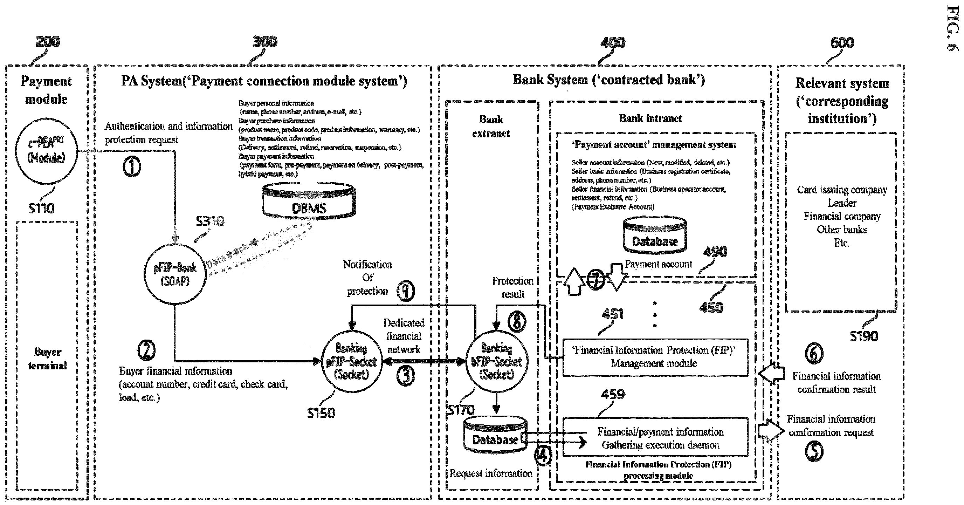

Referring to FIG. 6, in the information protection and authentication process of the authentication process for a buyer, the "payment connection module system" 300 of a PA company responds S310 to the buyer's financial information from a payment module of the buyer terminal 200 and requests the contracted banking system for protection through the external connection system 410 of the "contracted banking system" 400 and a dedicated financial network S150, S170.

Next, after the "financial information protection (FIP) processing module" 450 requests S190 the "connection system" of the "corresponding financial institution" 600 including another bank, a card company, or a financial company to confirm the financial information such as the buyer's credit card and personal information used when opening an account, a validation result of the information is received, and the payment connection module system 300 receives an authentication result for the buyer through socket communication using a dedicated financial network.

Instead of using a separate buyer authentication method performed during payment through the existing PG company, the process above may perform buyer authentication after checking the buyer's financial information through a security system of a financial institution; thus, payment is made easy, and anyone may perform payment through authentication of the present disclosure once a bank account is available regardless of whether the buyer is a citizen or a foreigner.

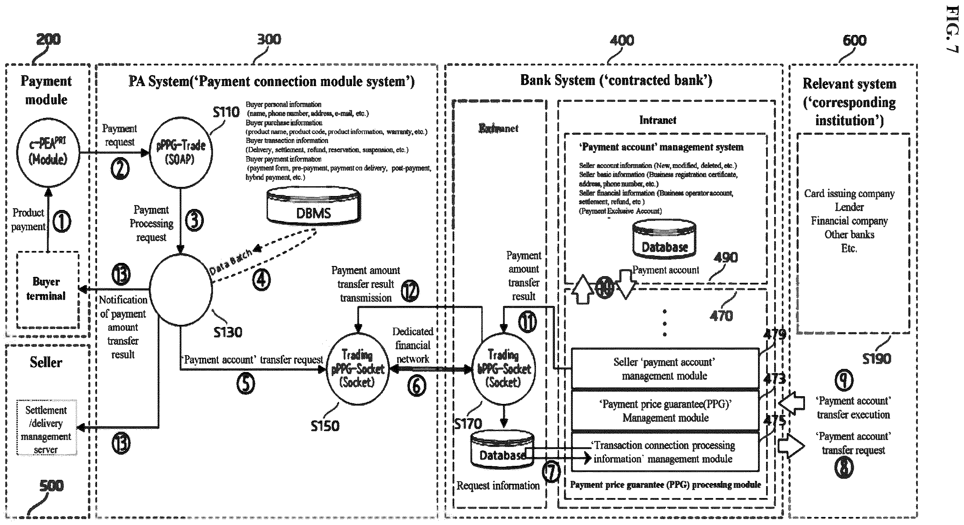

In the process of transferring a purchase amount in FIG. 7, the "payment connection module system" 300 receives a payment request S110 through the buyer terminal and requests a transfer to a payment account through the "contracted banking system" 400 and the "dedicated socket module" S150 via the "payment connection task processing unit" 370 in connection with the database management unit 340.

Next, the payment connection module system 300 receives a payment request through the "payment connection module dedicated socket" of the contracted bank external system 410 S170 and requests the "connection system" of the "corresponding institution" 600, such as another bank, a financial institution, or a card issuing company to perform a transfer of a payment amount due to the payment request S190 of the buyer through the "payment price guarantee (PPG) processing module" 470.

The transferred purchase amount is stored in the "seller's payment account" registered in the contracted bank, and the result of processing the purchase amount is notified to the "payment connection module system" 300 through a dedicated financial network of the contracted bank external system 410.

The payment connection module system 300 receives the result of processing a purchase amount by the contracted bank and notifies the result of processing the purchase amount to a transfer/delivery management service of the "seller system" 500.

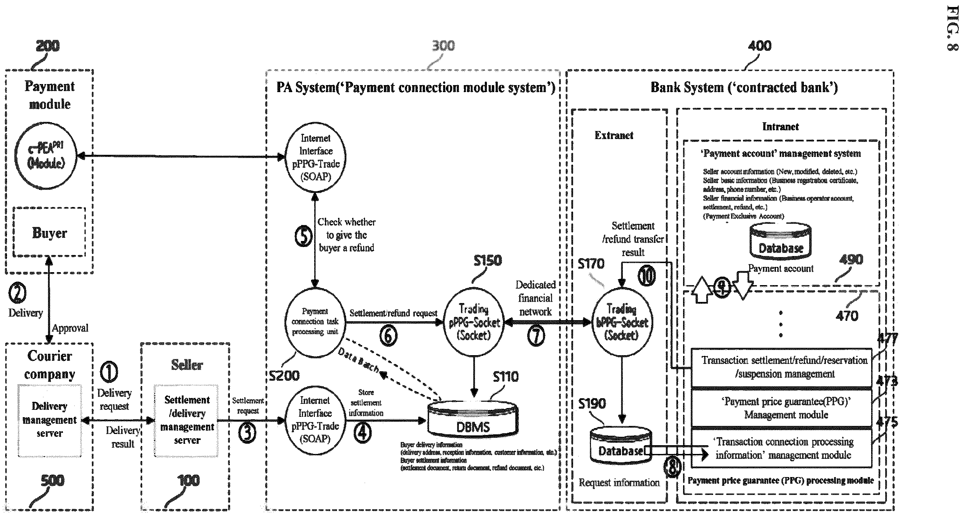

Referring to the process related to delivery and settlement with reference to FIG. 8,

The payment connection module system 300 receives information related to settlement and delivery from the seller system 100, stores the received information in the "database management unit" 340 of the "payment connection module system" 300, and requests settlement/refund using a dedicated financial network of the contracted bank connected to a PA company through the "payment connection task processing unit" 370.

A response is received from the "contracted banking system" 400 through a dedicated financial network and is stored in the database of the contracted bank external system S190; the "transaction connection processing information management module" 475 of the contracted bank internal system collects information, determines the appropriateness of a request, and processes a task in the "transaction settlement/refund/reservation/suspension management module" 477, and then transmits a settlement/refund result to the payment connection module system through the dedicated financial network.

The "payment connection module system" 300 stores the settlement/refund result in the "database management unit" and transmits the result to the buyer and the seller system.

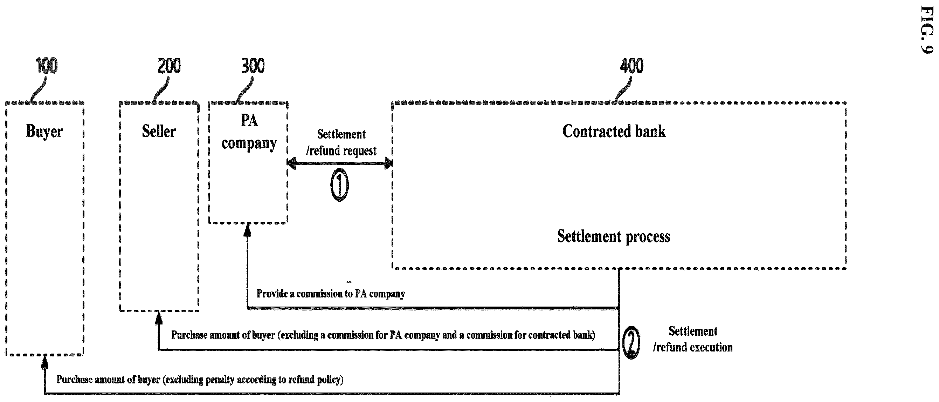

Referring to FIG. 9 to describe the settlement process in the final step, a settlement request is received through the "payment connection module system" 300, and the settlement process of the "contracted banking system" 400 is performed; the settlement method deals with a PA company's fee, a contracted bank's fee, a seller's purchase amount, and a buyer's refund. The settlement method may vary depending on a settlement target and an agreement made, but "simultaneous settlement" is performed by default. Since the present disclosure uses an instant settlement method that is made immediately according to a real-time settlement or a mutual agreement made in units of transactions, the settlement step and time are shortened so that the seller saves time by reducing the existing settlement steps, further reduces a commission, and obtains considerable benefits to the turnover of money, and the PA company reduces a portion of risk management costs for holding purchase amount and protection of information.

In the present disclosure, the seller system 100 may be composed of a live content providing server for live broadcasting and a settlement and delivery management server, supply images for goods or services through a smartphone, and transmit and receive data related to settlement and delivery.

The seller system 100 may transmit a product image or a simple video to the buyer terminal while operating a homepage; the payment connection module system 300 may edit the image for the seller's product in a predetermined format and transmit the edited image to the buyer terminal.

Various products may be serviced to the buyer terminal 200 in various ways, and authentication and payment may be processed in the manner described above; thus, the present disclosure may be applied usefully to various e-commerce systems and OTT environments.

The embodiments described above are merely an example for illustrating technical principles of the present disclosure, and various changes and modifications are possible from the disclosure by those skilled in the art to which the present disclosure belongs without deviating from the inherent characteristics of the present disclosure.

Therefore, it should be understood that embodiments of the present disclosure are not intended to limit the technical principles of the present disclosure but to support describing the present disclosure, and thus the technical scope of the present disclosure is not limited by the embodiments.

The technical scope of the present disclosure should be judged by the appended claims, and all of the technical principles found within the range equivalent to the technical scope of the present disclosure should be interpreted to belong thereto.

## Claims

1. An electronic payment method for e-commerce between a plurality of unspecified buyers and a plurality of unspecified sellers suitable for an OTT environment, the method comprising:
receiving information related to payment of purchase amount through a payment module of a buyer terminal by a payment connection module system;
notifying a contracted banking system managing a seller's payment account of information related to payment through a dedicated financial network by the payment connection module system;
receiving a result of transferring the payment amount to the payment account in the seller's name, which is an account in a business operator's real-name and managed by the contracted banking system, by the payment connection module system from a financial institution system including a bank and a card issuing company connected to a buyer by the contracted banking system according to payment request information of the buyer;
receiving a transfer result by the payment connection module system and notifying a seller system and/or a buyer terminal of the result; and
notifying the contracted banking system of whether delivery and so on have been normally terminated by the payment connection module system so that the contracted banking system instantly settles a payment amount transferred to the payment account in real-time or according to an agreement in units of transactions for each seller and transfers the payment amount to a designated account of each seller.

2. The method of claim 1, wherein the payment account is an account specially stipulated in the seller's real name, and transfer rights for depositing and withdrawing payment amount to and from the payment account are used only by a contracted bank.

3. The method of claim 1 or 2, wherein payment amount transferred to the payment account is transferred from a buyer's account or transferred from the corresponding financial institution such as a card issuing company, a lender, or a financial company selected as a payment means by the buyer according to contracted conditions.

4. The method of claim 1, further comprising receiving, by the payment connection module system, real-time video contents provided from a seller system and providing the received contents to a buyer terminal through a streaming method so that the contents of a product or a service are viewed on a real-time video through the buyer terminal.

5. The method of claim 4, wherein the payment connection module system receives the real-time video contents from a seller system, stores the received contents in a database, and provides recorded video contents to a buyer terminal according to broadcast program schedule.

6. The method of claim 1, wherein a method for instantly settling and paying a purchase amount deposited to the payment account at a variable price for each seller is performed when payment is made in a post-payment scheme.

7. The method of claim 1, wherein the settling method for each seller is performed instantly by a computing system of the contracted banking system.

8. The method of claim 1, wherein, among payment related information received by the payment connection module system from the buyer terminal, major information including the buyer's financial information is not stored in the payment connection module system, and the contracted banking system in connection with the corresponding financial institution system processes the information to handle payment and authentication tasks.

9. The method of claim 1, wherein the seller system transmits video contents to the payment connection module system to a smartphone and manages information related to delivery and payment.

10. The method of claim 1, further comprising settling and transferring payment amount for each seller, each payment connection module system operator, and each courier company operator by the contracted banking system.

11. In an electronic payment method for e-commerce between a plurality of unspecified buyers and a plurality of unspecified sellers suitable for an OTT environment, a payment connection module system comprising:
an Internet interface unit being connected to a buyer terminal, a seller system, and a courier company system through the Internet and transmitting and receiving information related to payment and video contents;
a payment connection task processing unit processing the information related to payment;
a broadcast receiving unit receiving video contents transmitted from the seller system and broadcast streaming unit streaming the received video contents to a buyer terminal;
a database management unit storing and managing information except for major financial information among the payment task processing information;
a payment connection module system configured to include a dedicated financial network interface unit for accessing the payment connection module system and the contracted banking system for the payment task processing; and
an electronic payment system comprising a contracted banking system processing buyer authentication in connection with the corresponding financial institution system of the buyer according to payment-related information received from the payment connection module system and processing a task for transferring the buyer's payment amount to a payment account in the seller's name, which is an account in a business operator's real name and managed by the contracted banking system, from a financial institution system including a buyer's bank and a card issuing company.

12. The system of claim 11, wherein the payment account is an account specially stipulated in the seller's real name, and transfer rights for depositing and withdrawing payment amount to and from the payment account are used only by a contracted bank.

13. The system of claim 11 or 12, wherein the payment connection module system further includes an overseas payment connection daemon module for processing an international payment task by being connected with a payment connection module system operated abroad.

14. The system of claim 11, wherein video contents received from a seller system are transmitted to a buyer terminal in the form of a live broadcast, a recorded broadcast, or an image.

15. The system of claim 11 or 12, wherein the contracted banking system is configured to include a financial information protection processing module connected with a payment connection module system through a dedicated financial network to protect and manage financial information of a buyer and to process a payment-related task; a payment amount guarantee processing module for managing tasks including authentication, payment amount guarantee, transaction connection processing, and transaction settlement in relation to seller payment account management and payment; and a database unit storing and managing a payment account.

16. The system of claim 11 or 12, wherein the contracted banking system transfers purchase amount to a seller's payment account from the corresponding financial institution system connected with a buyer according to payment information of the buyer requested by the payment connection module system or processes a related task by transferring purchase amount according to contracted conditions.
